# EUROPEAN PATENT APPLICATION

(11) **EP 2 620 213 A1**
(43) Date of publication of application: **31.07.2013**
(21) Application number: 12152814.5
(22) Date of filing: 27.01.2012
(51) Int. Cl.: B01J 21/06, B01J 23/52, B01J 23/44, B01J 35/00, B01J 37/00, B01J 37/02, B01J 37/03, B01D 53/00

(54) **Catalyst for the conversion of liquid ammonia precursor solutions to gaseous ammonia avoiding the formation of undesired side products**

(71) Applicant: Paul Scherrer Institut, 5232 Villigen PSI (CH)
(72) Inventor: Peitz, Daniel, 5313 Klingnau (CH); Kröcher, Oliver, 5313 Klingnau (CH)
(74) Representative: Fischer, Michael

(57) **Abstract**

The presented invention is related to a catalyst which can be used for the conversion of ammonia precursor solutions to gaseous ammonia and other gases to provide ammonia for the selective catalytic reduction process. Especially formate-containing or formate-related ammonia precursor compounds can be decomposed to unproblematic reaction products using the presented catalyst. Prior art catalysts produced toxic and/or corrosive reaction products from decomposition of formate-containing or formic acid derived ammonia storage compounds. The reaction products evolving with the presented novel catalyst may not exclusively be used as ammonia for the selective catalytic reduction process, but may also be used as hydrogen-containing gas with additional hydrogen stored as ammonia for further release.

The catalyst is composed of a metal oxide which is required for efficient hydrolysis. On the metal oxide support, a noble metal catalyst for the decomposition of side products is deposited. The noble metal must not be active in the oxidation of ammonia.

The catalyst is highly resistant to hydrothermal aging and shows good stability versus SO₂ poisoning, making it perfectly suitable for exhaust gas after-treatment purposes.

## Description

The presented invention is related to a catalyst which can be used for the conversion of ammonia precursor solutions to gaseous ammonia and other gases to provide ammonia for the selective catalytic reduction process. Especially formate-containing or formate-related ammonia precursor compounds can be decomposed to unproblematic reaction products using the presented catalyst.

Prior art catalysts produced toxic and/or corrosive reaction products from decomposition of formate-containing or formic acid derived ammonia storage compounds. The reaction products evolving with the presented novel catalyst may not exclusively be used as ammonia for the selective catalytic reduction process, but may also be used as hydrogen-containing gas with additional hydrogen stored as ammonia for further release.

### Background

Most combustion processes use air as a source of oxygen. As air also contains nitrogen, and many combustion processes use air to fuel ratios above the stoichiometry necessary for complete oxidation of the fuel, NOₓ is formed during combustion. As NOₓ is harmful its emission is regulated for various applications, e.g. the NOₓ emissions from Diesel combustion engines in mobile applications or the NOₓ emissions from fossil fuel combustion power plants. The most widespread technique for NOₓ reduction is its conversion to nitrogen using ammonia. This process, called selective catalytic reduction (SCR), requires a supply of ammonia. As ammonia is a corrosive and toxic compound, its handling is complicated. Thus, often ammonia precursor solutions are used instead of ammonia especially when implementing SCR into mobile applications. The stored ammonia is released by decomposition of the precursor in the hot exhaust gas. The most widespread precursor compound is urea, but several other compounds have been proposed, such as ammonium carbamate, ammonium formate, formamide (other name: methanamide), guanidinium formate and others. All these alternatives to urea have certain advantages compared to urea, but besides the desired ammonia they also release other reaction products during their decomposition, many of them being toxic and/or corrosive when utilizing prior art decomposition catalysts.

On the one hand, there are catalysts for the efficient decomposition of these alternative precursor compounds to release ammonia containing gas, but so far they were not able to suppress the formation of undesired side products. On the other hand, there are some catalysts known for the efficient conversion of some of the problematic side-products to harmless substances. However, these catalysts also convert the produced and desired ammonia to undesired reaction products like NOₓ or N₂, which renders them inappropriate for conversion of ammonia precursors to ammonia.

Simple combination of the two types of catalysts would result in either insufficient yields of ammonia from the inserted precursor compound or still unacceptable emissions of the corrosive and/or toxic side products.

The present objective is therefore to provide to a combined catalyst for the efficient conversion of ammonia precursor compounds to ammonia, while toxic and/or corrosive side products are efficiently converted to harmless compounds which do not interfere with ammonia or the SCR catalyst. The conversion of problematic side products in the decomposition product gas mixture to harmless compounds also provides the possibility to use the ammonia-containing product gas mixture as a precursor gas for conversion to hydrogen.

### Invention

The catalyst is composed of a metal oxide which is required for efficient hydrolysis. Thus, TiO₂, Al₂O₃, ZrO₂ are typical examples of the utilized metal oxide material, which could also be stabilized by SiO₂ and/or WO₃. On the metal oxide support, a catalyst for the decomposition of side products is deposited. The catalyst is typically a noble metal such as Au, Pd, Ag or Cu. The deposited catalyst can be treated as a dopant for the metal oxide, as it enhances decomposition of the precursor compound to ammonia while reducing the formation of side products. But also already formed side-products may be catalytically decomposed by the interaction of the dopant and metal oxide. The doped catalyst must not convert the majority of the produced ammonia, as it constitutes the desired reaction product.

The conversion of the ammonia precursor may be performed in various procedures: The ammonia precursor solution could be evaporated and the produced gases could be passed over the proposed catalysts which could be present either as pure catalyst or deposited on a catalyst support such as a ceramic or metallic monolith, foam, granules or others. Also, the solution could be sprayed into the hot exhaust gas, leading to the (partial) evaporation of water and possibly also the precursor compound before the combined gas stream is passed over the catalyst present in one of the previously mentioned states. In addition, the conversion could be executed in the liquid phase by applying pressure on the ammonia precursor solution during heating in a small reactor with catalyst inside. Again, the catalyst could be in any of the previously described states. By any of the presented methods of decomposition of the ammonia precursor solution or variations and combinations thereof, the resulting product gas mixture contains ammonia and harmless co-products such as e.g. water and carbon dioxide from the ammonia precursor compound decomposition.

Prior art ammonia precursor solution decomposition catalysts, also called hydrolysis catalysts, are not capable of effectively decomposing formic acid, formates or other formic acid derivates into non-toxic, non-corrosive gases. Formic acid constitutes a particularly high threat to the exhaust gas after-treatment system, as formic acid will corrode metallic parts. Unlike other acidic components, which can be found sometimes in the exhaust gas, such as e.g. sulfuric acid (H₂SO₄) or hydrochloric acid (HCl), formic acid will not form a passivating layer on the corrosion site, therefore giving rise to continuing corrosion at a given site. Decomposition of formic acid is the only possibility to avoid this kind of pitting corrosion. Current hydrolysis catalysts decompose formic acid almost selectively to CO and H₂O above around 290°C. However, CO is a highly toxic gas, which is also regulated by emission legislation. Below the previous stated temperature, formic acid will usually not be fully decomposed. Therefore, also condensation products like e.g. methanamide can evolve from formic acid and the produced ammonia. Methanamide is an undesired reaction product, which ideally could again be decomposed in an O₂ containing wetted gas flow to yield NH₃, CO₂ and H₂O. On the other hand, methanamide has the possibility to split off an H₂O molecule to yield HCN (hydrogen cyanide). HCN is a very toxic component which must be avoided. As all formate- or formate-derivatives-containing ammonia precursor compounds yield HCN as a side-product on prior art hydrolysis catalysts, the widespread utilization of these alternative ammonia precursor compounds has been limited so far. Our invention constitutes a method of converting these alternative ammonia precursors to ammonia using a catalyst without forming previously described toxic and/or corrosive side products in significant amounts.

### Existing systems

In disclosure JP8323151A methanamide is proposed as one of many possible ammonia storage compounds. Synthetic mordenite containing iron is mentioned as decomposition catalyst. There are no comments about the side products, which would evolve from this combination.

Disclosure DE102005059250A1 specifically proposes the use of methanamide as ammonia precursor compound. TiO₂, Al₂O₃, SiO₂, mixtures thereof and hydrothermally stable zeolites, which are completely or partially metal-exchanged are proposed as catalyst with Pd or Au doping in the range of 0.1-2 g of dopant per L of catalyst volume. The Pd or Au doping is intended to oxidize CO, which evolves from methanamide decomposition.

WO2004069385A1 and WO2006013229A1 mention the utilization of ammonium formate and ammonium formate urea mixtures. There are no specifications about the decomposition catalysts contained in the documents, the general background only mentions SCR catalysts. Therefore, decomposition on SCR catalysts is implied.

DE102007061440A1 mentions the use of guanidinium formate, guanidinium formate urea mixtures, and guanidinium formate ammonium salt (e.g. ammonium formate) mixtures with 0.001-2% (by mass) Pd or Au doped catalysts.

TiO₂, Al₂O₃, SiO₂, mixtures thereof and hydrothermally stable zeolites, which are completely or partially metal-exchanged are proposed as catalyst with Pd or Au doping in the range of 0.001-2% (by mass). The Pd or Au doping is intended to oxidize CO, which evolves from formic acid decomposition.

In the publication "A model gas study of ammonium formate, methanamide and guanidinium formate as alternative ammonia precursor compounds for the selective catalytic reduction of nitrogen oxides in diesel exhaust gas" (O. Kröcher, M. Elsener, E. Jacob, Appl. Catal. B 2009, 88, 66-82.) a selection of reducing agents is compared concerning their decomposition on common hydrolysis catalysts or SCR catalysts. In the publication one can find several examples how the incomplete decomposition of a reducing agent will lead to undesired emissions. In particular, it is reported that methanamide, ammonium formate and guanidinium formate can produce corrosive formic acid emissions, toxic carbon monoxide, toxic methanamide and toxic hydrogen cyanide (HCN) on all of the tested catalysts under certain application-relevant conditions.

In the publication "Catalyst Strategies for Meeting Super-Ultra-Low-Emissions-Vehicle Standards" (D. Morris, M. V. Twigg, N. R. Collins, R. J. Brisley, D. S. Lafyatis, T. H. Ballinger, SAE Technical Papers Series 1999, 1999-01-3067) an Au-based catalyst is presented as an ambient temperature light-off catalyst for CO oxidation in exhaust gas after-treatment in automotive applications. The catalyst must be protected from high concentrations of water vapor and hydrocarbons to achieve low-temperature activity.

In the review "Gold, an alternative to platinum group metals in automobile catalytic converters" (Y. Zhang, R. W. Cattrall, I. D. McKelvie, S. D. Kolev, Gold bull. 2011, 44, 145-153.) an overview on the past, present and future utilization of Au-based catalysts for exhaust gas after-treatment is given. Au-based catalysts are mainly proposed as oxidation catalysts, but are also mentioned as HC-SCR catalysts, where hydrocarbons rather than ammonia are used as reducing agents for NOₓ. In all exemplary applications, the insufficient high-temperature stability along with a high sensitivity towards SO₂-aging are mentioned as impeding properties for widespread utilization of Au-based catalysts.

### Description

The objective of the presented invention is to disclose a catalyst for the conversion of formate-containing or formic acid derived ammonia precursor compounds to ammonia without the formation of undesirable side products like formic acid, carbon monoxide, methanamide or hydrogen cyanide. The presented catalysts show a remarkably good stability upon hydrothermal aging and sufficient resistivity against SO₂ poisoning for the use in exhaust gas after-treatment.

The extraordinary performance of the presented catalysts is due to finely dispersed noble metal on top of typical hydrolysis catalysts. The combination of these two materials enables a reliable decomposition of the ammonia storage compounds and formic acid at the same time. The amount and kind of noble metal must be well-chosen, as the oxidation of the desired reaction product ammonia must be avoided. The amount of deposited noble metal is consequently very low, but due to a very high dispersion into nanoclusters and/or individual atoms on the high-surface area support, the activity is sufficient for formic acid decomposition.

The high-surface area support is chosen from well-known hydrolysis catalysts, such as TiO₂, ZrO₂, Al₂O₃, or mixtures thereof, possibly stabilized by SiO₂ and/or WO₃. Also, SCR catalysts, such as vanadia-based catalysts, metal-exchanged zeolites, or CeO₂/ZrO₂ containing but vanadia-free catalysts, which are used for hydrolysis may be utilized for decomposition. In this case, the SCR catalysts will be used as support for the deposition of the noble metal.

As noble metal doping, Au, Pd, Ag, Cu or combinations thereof are used, preferentially Au, Pd, Ag or combinations thereof, more preferentially Au, Pd or combinations thereof, most preferentially Au. The amount of dopant by mass is 0.001-2.5%, preferentially 0.001-1.5%, more preferentially 0.01-1.5%.

The deposition of Au on hydrolysis catalysts on the example of TiO₂ is performed using a deposition-precipitation method. In one realization, the preparation was performed according to previously published methods of S. Tsubota et al. (Tsubota, S.; Haruta, M.; Kobayashi, T.; Ueda, A.; Nakahara, Y. In Preparation of Catalysts V; Poncelet, G.; Jacobs, P.A.; Grange, P.; Delmon B., Eds.; Elsevier Science B.V.: Amsterdam, 1991; pp. 695-704.) with some important variations: Anatase TiO₂ (DT51, Cristal Global; BET surface 90 m²/g, ØD₅₀ = 1.7 µm) was suspended and adjusted to pH 9 using 0.2 M NaOH. HAuCl₄ (Sigma) as precursor for the Au doping was dissolved (0.005 M) in water and pH 9 adjusted before it was added dropwise. Prior to stirring for 16 h, the pH was again adjusted to 9. The catalyst was recovered by centrifugation, washed with H₂O for Cl⁻ removal, again recovered by centrifugation and dried at 80°C before sintering in air at 400°C for 5h. Au/TiO₂ was coated on ceramic cordierite (400 cpsi, Corning) according to a previously published procedure (O. Kröcher, Stud. Surf. Sci. Catal. 2007, 171, 261-289.) using Ludox AS-40 (Sigma) binder and calcination in air at 400°C for 5h.

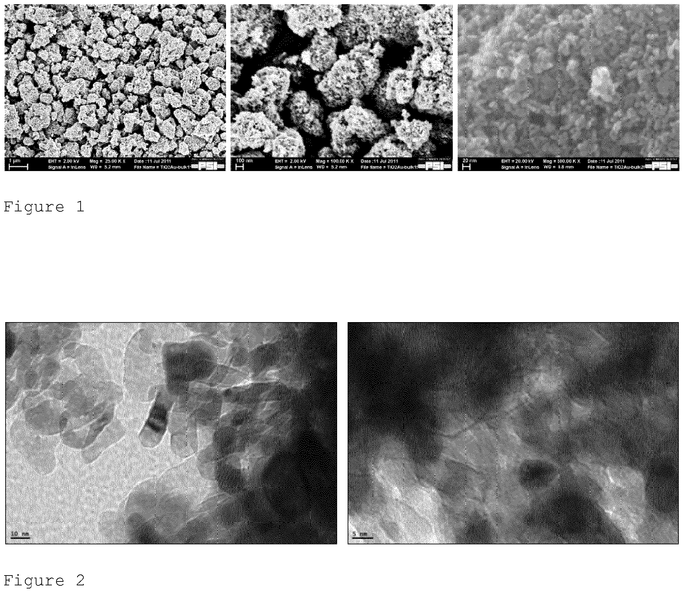

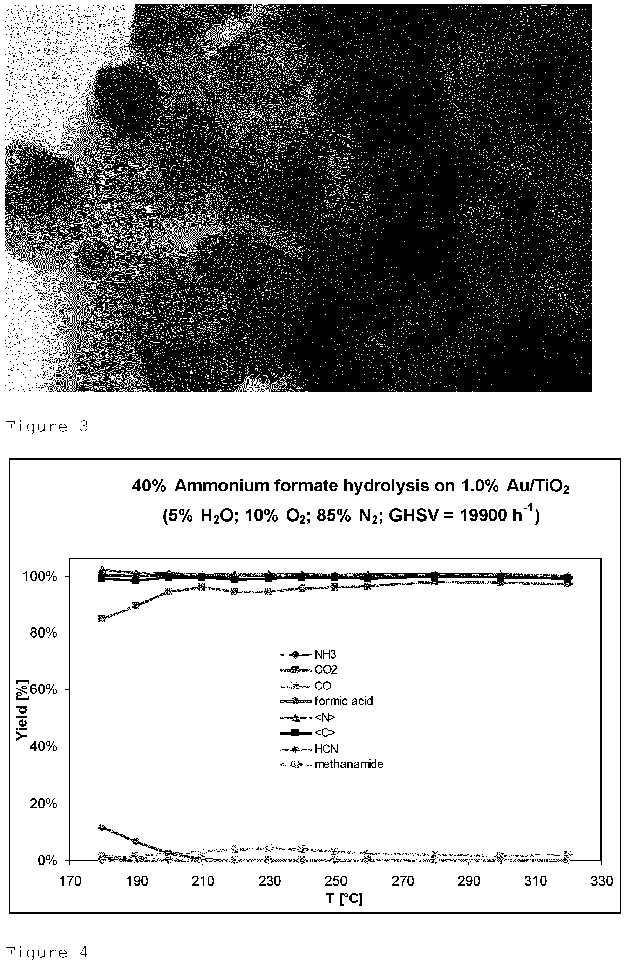

The catalyst was characterized by scanning electron microscopy (SEM) and transmission electron microscopy (TEM) in combination with energy-dispersive X-ray spectroscopy. The characterization of the deposited Au particles in freshly prepared catalyst yielded particle sizes below the resolution capacity of standard SEM and TEM instruments. In SEM images there are no Au particles visible, only the catalyst support with its highly corrugated surface area can be monitored as demonstrated in Figure 1. The Au-doped catalyst can not be distinguished from the plain support by SEM. TEM images the result is very similar, as, again, only the highly corrugated surface and three-dimensional structure of the support can be seen, but no Au particles as demonstrated in Figure 2. After hydrothermal aging some Au particles could be detected with diameters of 20 nm as seen in Figure 3. However, they did not represent the entity of deposited Au. On the highly corrugated TiO₂ support, most of the Au was finely dispersed as nanoclusters and/or even individual atoms as known from literature (A. A. Herzing, C. J. Kiely, A. F. Carley, P. Landon, G. J. Hutchings, Science 2008, 321, 1331-1335.). The surface concentration of deposited Au can be estimated using the determined BET surface of the support to be 166 µg of Au per m² of TiO₂ support. At this surface concentration, the catalyst could be hydrothermally aged at 750°C with 10% H₂O vapor in the gas phase for 5h and show no significant decline in activity during decomposition of ammonia precursor compounds in the relevant operation range. In addition, 5h of hydrothermal aging at 800°C with 10% H₂O vapor was performed and the catalyst proved to be still performing exceptionally well in the relevant operation range. Prior art catalysts would have shown serious deactivation due to sintering of deposited Au particles on the support surface. Aging temperatures of 600°C have been reported to decrease the activity of prior art catalysts from 100% to <1% (A. A. Herzing, C. J. Kiely, A. F. Carley, P. Landon, G. J. Hutchings, Science 2008, 321, 1331-1335.).

The catalyst, which was previously described in its preparation and which is to be protected by this disclosure did on the one hand lose activity for the CO oxidation reaction from 100% conversion to just 18% conversion (at 250°C, 14900 h⁻¹, 1000 ppm CO, 10% O₂, 5% H₂O) after aging at 750°C for 10h. At the same time, on the other hand, the decomposition of ammonia precursor compound solutions remained essentially constant in the relevant operation range.

Moreover, the sensitivity of the catalyst against sulfur poisoning with SO₂ was investigated. The aging conditions were 200 ppm SO₂ for 6h at 400°C. Afterwards the catalyst was evaluated for the decomposition of ammonia precursor solutions and showed performances still acceptable for the utilization as decomposition catalyst.

### Application examples

In the following, several exemplary measurements of prepared Au/TiO₂ catalysts for the decomposition of ammonia precursor solutions are presented.

Au/TiO₂ catalysts with 1.5%, 1.0% and 0.5% (by mass of Au dopant) were prepared according to the previously described method. The catalysts were tested for the decomposition of guanidinium formate-, ammonium formate- and methanamide solution, which were sprayed on the catalysts inside a model exhaust gas test setup.

Figure 4 shows the results of catalytic decomposition of a 40% ammonium formate aqueous solution on a 1.0% Au/TiO₂ catalyst in model exhaust consisting of 5% H₂O, 10% O₂ and 85% N₂. The gas hourly space velocity was 19900 h⁻¹, while the dosing of the liquid precursor solution was 3 mL/h. The product gas concentrations were determined and correlated to the input amount of precursor solution to calculate the yields. The temperature was screened from 180°C to 320°C in (typically) 10 K intervals. The temperature was only changed if constant conversion was achieved.

From 210°C, ammonium formate was decomposed without the emission of formic acid, methanamide or HCN. This result is in great contrast to the gas distribution, which would be determined without the Au doping (compare: "A model gas study of ammonium formate, methanamide and guanidinium formate as alternative ammonia precursor compounds for the selective catalytic reduction of nitrogen oxides in diesel exhaust gas" O. Kröcher, M. Elsener, E. Jacob, Appl. Catal. B 2009, 88, 66-82).

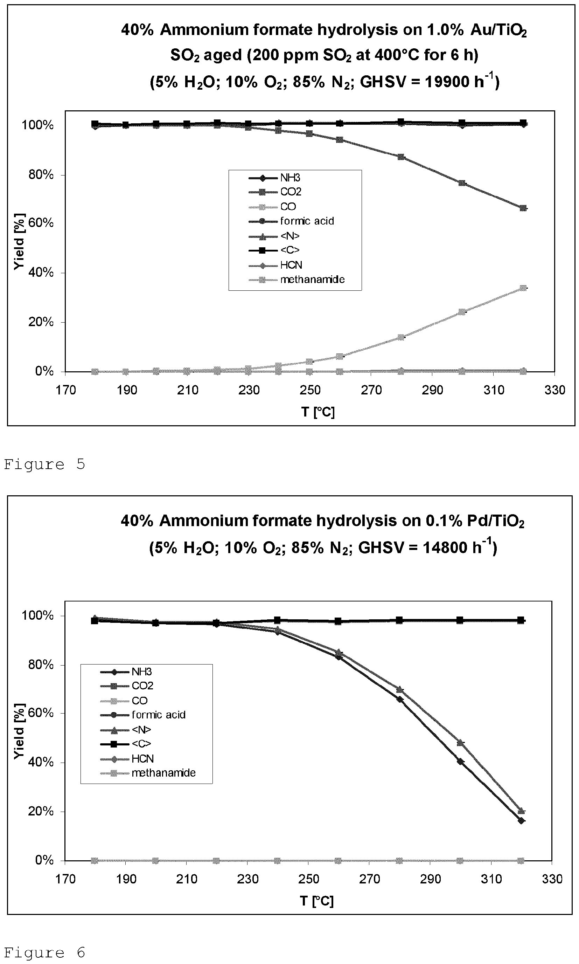

Figure 5 shows the reaction product yields after a harsh SO₂ aging procedure (200 ppm SO₂ at 400°C for 6 h). The formation of the most critical side products formic acid, methanamide and HCN was still perfectly suppressed, a certain percentage of the CO₂ yield, however, was replaced by CO. The formation of CO is not ideal, but CO does not constitute a very critical emission for the decomposition of ammonia precursor compounds, as the exhaust gas usually contains much higher concentrations of CO. As a result, Figure 5 points out the high stability of the catalyst versus poisoning by SO₂, which is a very important deactivation route in exhaust gas after-treatment applications. Usually, the exhaust in applications will contain much lower concentrations of SO₂, but the time the catalyst will need to tolerate the flow will be much longer. Thus, the applied conditions are representative of a lifetime in an automotive application utilizing ultra-low-sulfur (10 ppm sulfur) Diesel fuel, which recently became standard fuel in most countries.

Figure 6 shows the decomposition of 40% ammonium formate aqueous solution on a 0.1% Pd doped TiO₂ catalyst prepared by the incipient wetness impregnation method. Again, there are no side products like formic acid, methanamide or HCN, this time in the entire temperature window from 180-320°C. However, the yield of ammonia was strongly reduced starting from 240°C to a value of less than 20% at 320°C. Only a small part of the loss could be attributed to the formation of NO, NO₂ and N₂O, most of the ammonia was oxidized to N₂. The measurement should therefore exemplify how the addition of noble metals reduces side products, but usually also leads to a reduction in ammonia yield, which will render the catalyst only useful if operated at dynamic or stationary conditions constantly below 220°C.

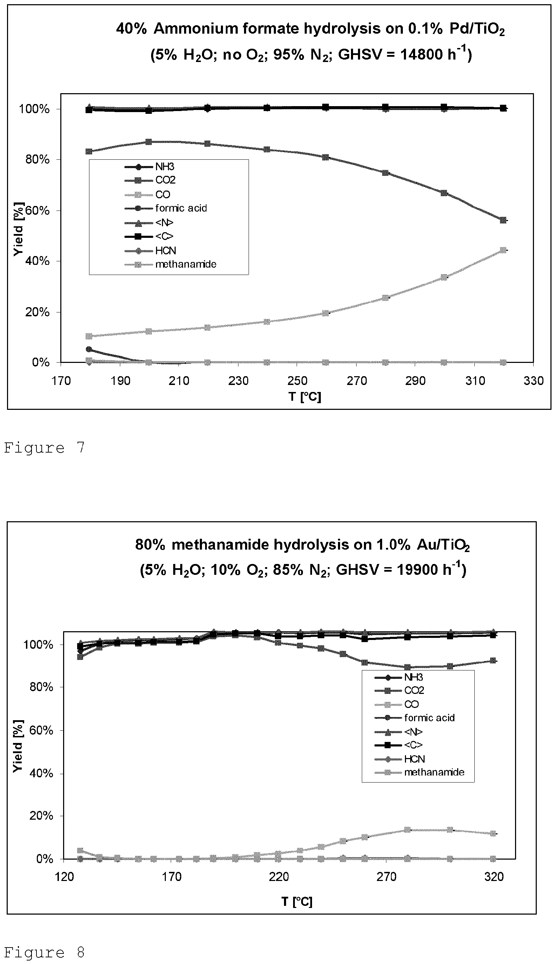

Operating the catalyst from Figure 6 under O₂-free conditions will produce much better results as shown in Figure 7: The ammonia yield did not decrease even at high temperatures, but the formation of side products was still suppressed at temperatures higher than 180°C. The measurement should therefore exemplify an embodiment of a catalyst for the decomposition of ammonia precursor compounds under O₂-free conditions if the catalyst would oxidize ammonia under O₂-containing conditions.

In addition to experiments with ammonium formate, also catalytic decomposition of 80% methanamide aqueous solution on Au-doped TiO₂ catalyst prepared by the previously described method was tested.

Figure 8 shows the decomposition of 80% methanamide aqueous solution on 1.0% Au/TiO₂ in oxygen-containing atmosphere at 19900 h⁻¹. The most critical side products formic acid, methanamide and HCN are not present at temperatures above 135°C. A wide operation range is therefore accessible for the decomposition of methanamide solutions as precursor compounds for ammonia generation.

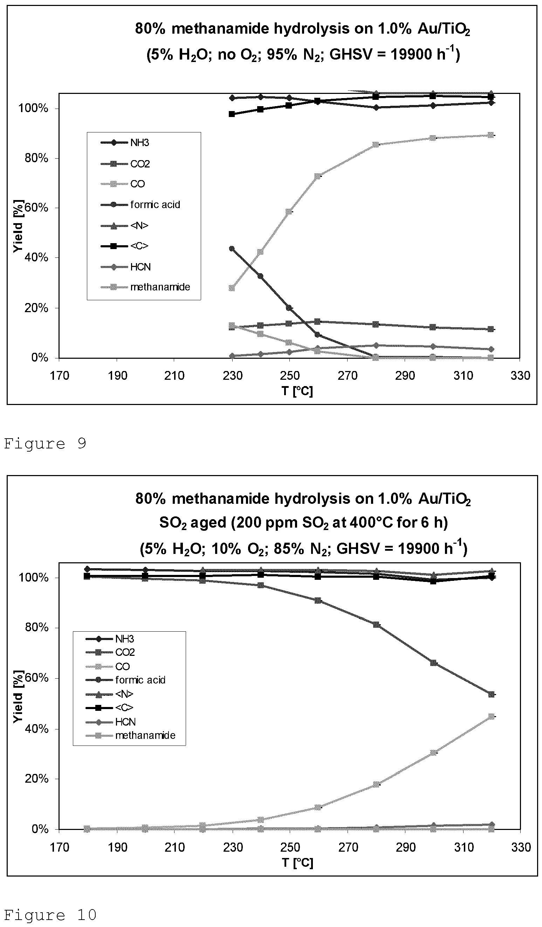

Figure 9 shows the product distribution for the decomposition of 80% methanamide aqueous solution under identical conditions as for Figure 8 except for the replacement of oxygen by nitrogen to create an oxygen-free atmosphere. Here, not all the critical side products formic acid, methanamide and HCN are suppressed. There is an increased formation of CO, but no complete substitution of CO₂ by CO. The previous disclosure DE102005059250A1 claims to use the addition of Au or Pd exclusively in order to oxidize CO formed during the decomposition of methanamide. However, this effect is not of primary interest in our disclosure of using Au to facilitate the decomposition of methanamide and suppress the formation of highly undesirable side products like formic acid, methanamide or HCN - whether in an oxygen-free or oxygen-containing atmosphere. The reason for Au or other noble metal doping is to enable formic acid decomposition, thereby removing a necessary reactant for the formation of methanamide or HCN.

Figure 10 shows how the product distribution is influenced by a SO₂ aging procedure consisting of 200 ppm SO₂ at 400°C for 6 h. The most critical side products are still suppressed, a slight elevation of HCN emissions is recorded at temperatures above 280°C compared to the experiment prior to the aging procedure. CO₂ is partially replaced by CO as a decomposition product, but overall CO₂ remains the more abundant reaction product in the operation range. This result demonstrates the surprising stability of an Au-based catalyst versus SO₂ aging, which is unprecedented in literature.

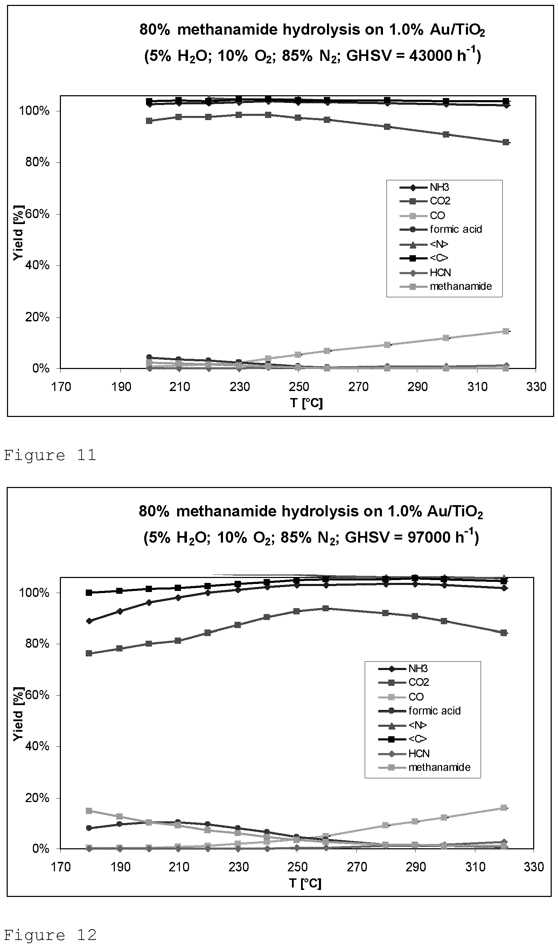

To demonstrate the activity of the catalyst, much higher space velocities were used in experiments of Figure 11 and Figure 12. Figure 11 shows the product distribution at 43000 h⁻¹, more than double compared to Figure 8. Still, the most critical components remain suppressed at temperatures above 250°C, and at very low levels below that temperature. Figure 12 shows an experiment with double space velocity compared to Figure 11, so quadruple relative to Figure 8. The most critical components are suppressed at temperatures above 270°C, but become more abundant below this temperature. CO₂ remains the most abundant carbon-containing decomposition product at all measured temperatures. These two examples demonstrate the high activity of the prepared catalyst, which led to appreciable performance even at much higher gas velocities.

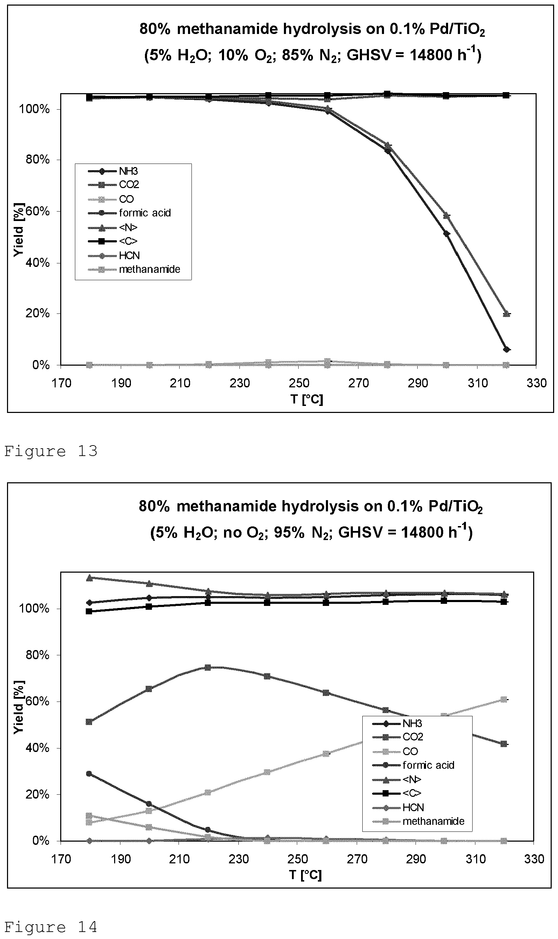

Also Pd was tested as a dopant of a hydrolysis catalyst for the conversion of an 80% methanamide aqueous solution. Figure 13 shows the product distribution when using a 0.1% Pd/TiO₂ catalyst prepared by the incipient wetness impregnation method. The Pd doping successfully suppressed the most critical side products formic acid, methanamide and HCN. In addition, it almost entirely eliminated CO emissions. However, also ammonia was oxidized over a wide temperature window, at 320°C almost quantitatively. This example shows that Pd doping at the used space velocity must be below 0.1% by mass in order to preserve the desired reaction product ammonia.

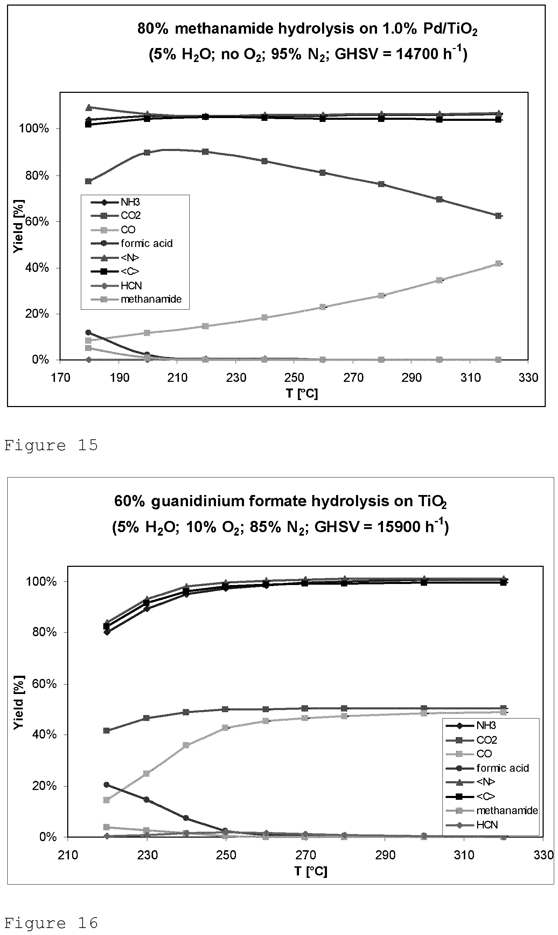

Figure 14 and Figure 15 represent the possibility to operate a Pd-doped TiO₂ catalyst under oxygen-free conditions in order to prevent the oxidation of ammonia. If 1% Pd doping is used like in Figure 15, the product gas composition contained no formic acid, methanamide or HCN from temperatures above 200°C during the decomposition of 80% methanamide aqueous solution. If only 0.1% Pd doping is used like in Figure 14, the undesired side products formic acid and methanamide persisted in the product gas flow up until 240°C. In addition, at 300°C or above, CO was the most prominent carbon-containing reaction product.

Furthermore, Au- and Pd-doped catalysts were tested for the decomposition of 60% guanidinium formate aqueous solution.

In order to point out the advantage of the doping, first the results of a non-doped catalyst typical of prior art catalysts are shown in Figure 16. At best, only half of the contained carbon was released as CO₂, while the other half was composed of CO, formic acid, methanamide and HCN.

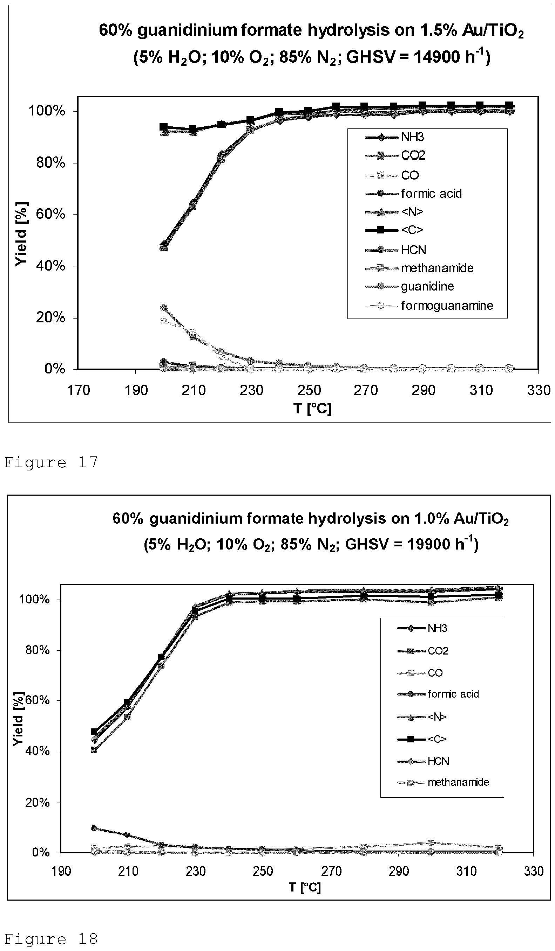

In Figure 17, the product composition during decomposition of a 60% guanidinium formate aqueous solution on a 1.5% Au-doped TiO₂ catalyst is depicted. The product gas composition was very different from the one obtained without Au-doping. While all the carbon was converted to CO₂ from 250°C to higher temperatures, the oxidation of ammonia remained absent even at 320°C. This tremendous improvement without concurrent side reactions or other disadvantages was not anticipated to this extent even to the expert in the art. The Au-doping eliminated any formic acid, methanamide or HCN emissions even at temperatures lower than 250°C.

The amount of Au-doping could even be reduced, and/or the space velocity could be increased without significantly deteriorating the suppression of undesired side products such as formic acid, methanamide and HCN. An example is shown in Figure 18.

Also, the decomposition under the exclusion of oxygen was possible, however, there was less CO₂ formed and undesired side products started to show up.

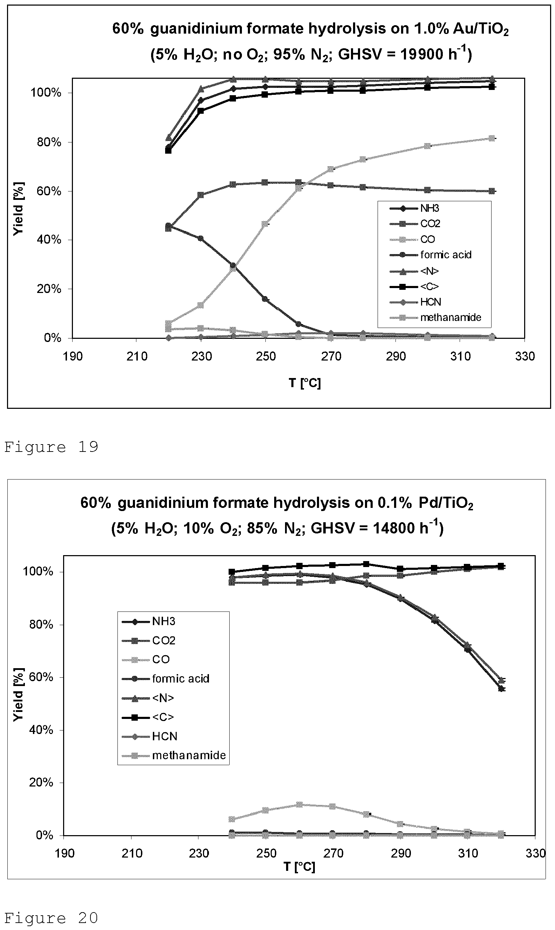

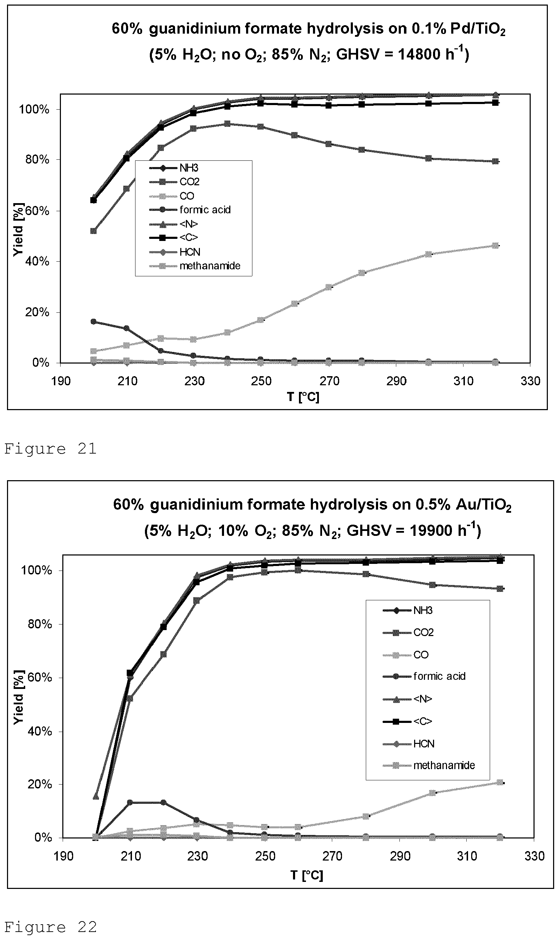

Pd-doping was also investigated for guanidinium formate decomposition, again, even small amounts of dopant caused significant oxidation of ammonia. Figure 20 shows the results of 60% guanidinium formate aqueous solution decomposition on a 0.1% Pd on TiO₂ catalyst in the presence of oxygen. When oxygen is turned off, as in Figure 21, ammonia was no longer oxidized. CO₂ yields also decreased if oxygen was excluded, but the undesired side products methanamide and HCN were still suppressed. Formic acid only became absent at temperatures of 250°C or higher.

The amount of deposited Au could be further reduced; Figure 22 shows a measurement with a 0.5% Au/TiO₂ catalyst. Reducing the amount of the dopant could shrink the acceptable operation range, as undesired side products started to show up at low temperatures.

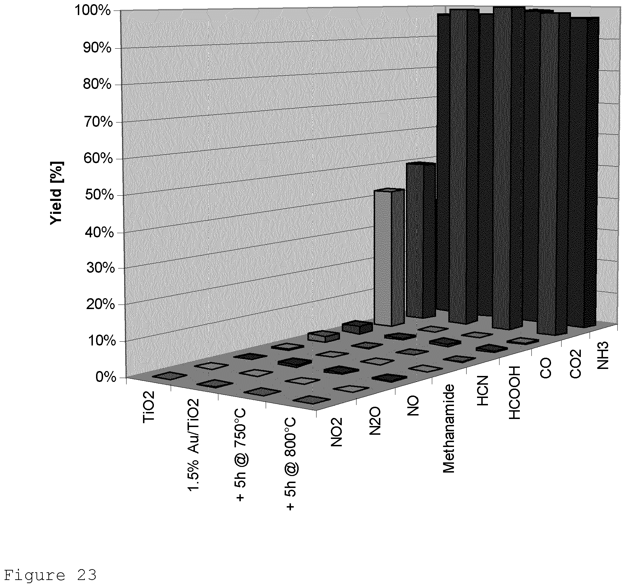

The hydrothermal stability of the Au/TiO₂ catalysts is truly remarkable; Figure 23 gives a good impression of the stability of the prepared Au/TiO₂ catalysts for an operation temperature of 250°C. The first row is showing the decomposition products on a pure TiO₂ catalyst, the second row for a freshly prepared 1.5% Au/TiO₂ catalyst, the third row for the 1.5% Au/TiO₂ catalyst, which was aged at 750°C and 10% H₂O atmosphere for 5h and the last row for the 1.5% Au/TiO₂ catalyst, which was first aged at 750°C and 10% H₂O atmosphere for 5 h and then additionally aged at 800°C and 10% H₂O atmosphere for 5 h. The Au-doping reduced the formation of undesired side products, as already pointed out previously. This effect was maintained even after the described severe hydrothermal aging conditions, which is in contrast to prior art Au-doped catalysts that are highly susceptible to hydrothermal aging conditions.

It should be pointed out that prior art catalysts were tested for the oxidation of CO, the reaction which was also intended to be fulfilled by the Au-doping of the catalyst in patents DE102005059250A1 and DE102007061440A1.

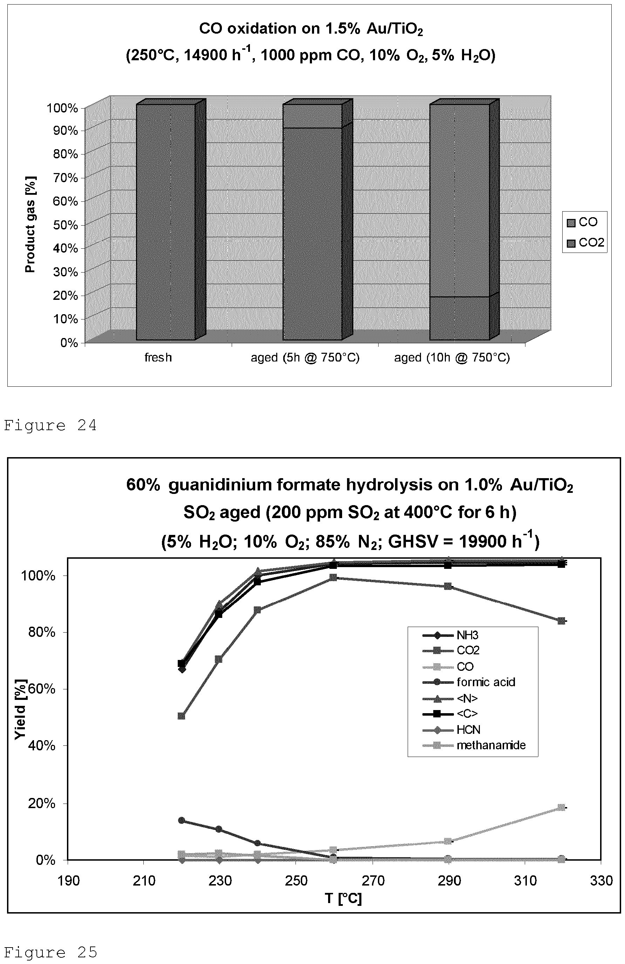

However, the CO oxidation reaction was heavily affected by the hydrothermal aging procedure, as Figure 24 demonstrates. Here, solely thermal aging in air at 750°C for either 5 h or 10 h led to a drop in CO oxidation down to less than 20% for the 10 h case. Still, the catalyst was very active for the decomposition of ammonia storage compounds to ammonia and other gaseous species under the exclusion of formic acid, methanamide and HCN. Therefore, the proposed catalyst was specifically developed to reliably decompose ammonia storage compounds, even under conditions, which were generally considered to be too harsh for Au-based catalysts.

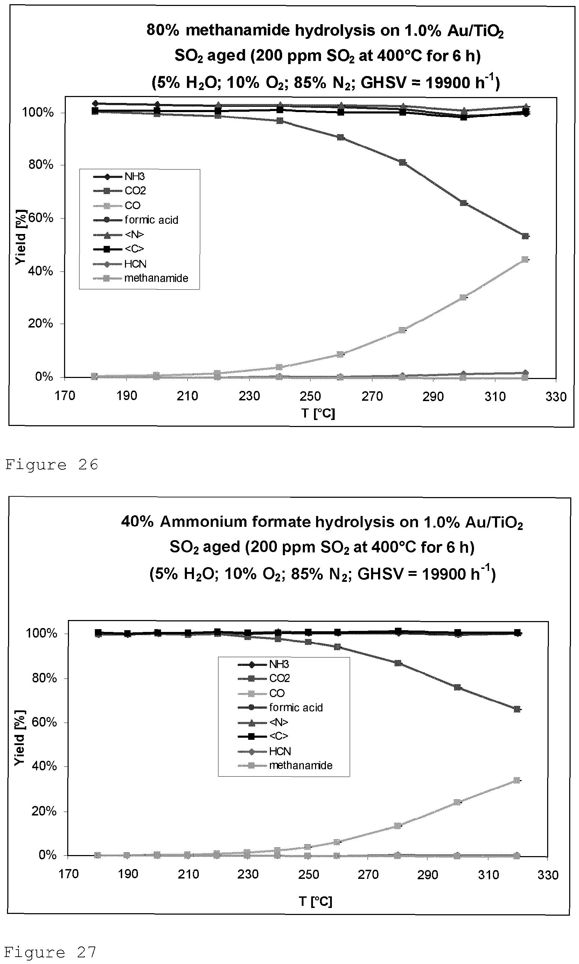

Moreover, the Au-doped catalyst was tested for its resistivity against poisoning by SO₂ For this reason, a 1.0% Au/TiO₂ catalyst was poisoned with 200 ppm SO₂ at 400°C and 5% H₂O for 6 h. Afterwards, the decomposition of different ammonia storage compounds was evaluated, amongst these were a 60% guanidinium formate aqueous solution, a 80% methanamide aqueous solution and a 40% ammonium formate aqueous solution. The corresponding results of the measurements can be found in Figures 25, 26 and 27, respectively. Again, the aging procedure represented a rather harsh treatment, considered already demanding for exhaust gas catalysts, but absolutely inappropriate for Au-based catalysts. The results indicate that there is an aging effect on the catalyst, which is worst for guanidinium formate decomposition. Here, temperatures of 260°C or higher are necessary to suppress the emission of formic acid, while a part of the carbon will still not be converted to CO₂ but CO. For the decomposition of methanamide and ammonium formate there is only little influence, as during their decomposition formic acid, methanamide and HCN remain largely suppressed. The aging is mainly visible as an enhanced formation of CO rather than CO₂.

The results of the SO₂-aging experiments, therefore, are surprisingly good even to persons well experienced in the field of Au catalysis.

### Conclusion of application examples

In combination, the Au-doped TiO₂ catalyst showed excellent activity and unique selectivity for the decomposition of ammonia precursor compounds containing formate or formic acid derivatives at operation conditions relevant to exhaust gas after-treatment. Also the most serious deactivation routes in exhaust gas after-treatment, namely, hydrothermal aging and poisoning by SO₂ were applied to the catalyst, with the result of unexpectedly good hydrothermal stability and also unusually high stability against SO₂ poisoning. These results could not have been anticipated even by those trained or even expert in the art, as this combination of properties of an Au-containing catalyst is truly unprecedented.

## Claims

1. Catalyst for the conversion of ammonia precursor solutions to gaseous ammonia and other gases to provide ammonia for the selective catalytic reduction process; said catalyst comprising a high surface area hydrolysis catalyst support with small amounts of noble metal deposited on top with the noble metal doping enabling the decomposition of formate-containing and formic acid derived ammonia precursor compounds without the formation of significant amounts of formic acid and/or methanamide and/or HCN, while at the same time, the noble metal does not oxidize produced ammonia.

2. Catalyst according to claim 1, wherein the hydrolysis catalyst is a high surface area material such as TiO₂ (preferably anatase modification), ZrO₂, Al₂O₃, or mixtures thereof, possibly stabilized by SiO₂ and/or WO₃ or, alternatively to the previously listed catalysts, SCR catalysts, such as vanadia-based catalysts, metal-exchanged zeolites, or CeO₂/ZrO₂ containing but vanadia-free catalysts may be utilized as support.

3. Catalyst according to claim 1 - 2, wherein the noble metal doping is Au, Pd, Ag, Cu or combinations thereof, preferentially Au, Pd, Ag or combinations thereof, more preferentially Au, Pd or combinations thereof, most preferentially Au.

4. Catalyst according to claim 1 - 3, wherein the noble metal content by mass is 0.001-2.5%, preferentially 0.001-1.5%, more preferentially 0.01-1.5%.

5. Catalyst according to claim 1 - 4, wherein not more than 500 µg of noble metal are deposited per m² of support material, and the noble metal is finely dispersed as nanoparticles, nanoclusters or individual atoms on the support.

6. Catalyst according to claim 1 - 5, which is prepared by deposition-precipitation method or another technique suitable for the fine distribution of the noble metal on the support material.

7. Catalyst according to claim 1 - 6, which is hydrothermally stable due to the high distribution of noble metal on the high surface area support.

8. Catalyst according to claim 1 - 7, which is resistant enough against aging by sulfur species, in particular sulfur dioxide, to remain active after aging comparable to standard lifetimes of catalysts in mobile exhaust gas after-treatment systems.

9. Catalyst according to claim 1 - 8, which is still active in decomposition of formate-containing or formic acid derived ammonia precursor compounds to product gases not containing significant amounts of formic acid, methanamide or HCN, even after hydrothermal aging conditions deactivated the catalysts capability to oxidize CO to CO₂.

10. Catalyst according to claim 1 - 9, which can be used in the form of powders, coated on pellets of any form and size, or extruded in various shapes, such as cylinders, doughnuts, stars, hollow cylinder, etc.

11. Catalyst according to claim 1 - 9, which can be extruded with extrusion agents, binders and other components in form of a honeycomb monolith or washcoated on metallic, ceramic or carbonaceous honeycomb monoliths.

12. Catalyst according to claim 1 - 9 wherein the step of bringing the ammonia precursor compound into contact with the catalyst is carried out at elevated temperatures in the range from 150 to 550 °C, at pressure in the range from 10³ to 10⁵ hPa and at an gas hourly space velocity (GHSV) in the range from 5*10³ to 10⁵ h⁻¹.

13. Catalyst according to claim 1 - 9 wherein the step of bringing the ammonia precursor compound solution into contact with the catalyst is carried out while the ammonia precursor compound solution is in a liquid state at elevated temperatures in the range from 50 to 550 °C, at pressure in the range of 5 - 100 bar.

14. Catalyst according to claim 1 - 9 in combination with any of claim 10 - 13, used to decompose guanidinium formate solutions to release ammonia.

15. Catalyst according to claim 1 - 9 in combination with any of claim 10 - 13, used to decompose ammonium formate solutions to release ammonia.

16. Catalyst according to claim 1 - 9 in combination with any of claim 10 - 13, used to decompose methanamide solutions to release ammonia.

17. A method for the conversion of ammonia precursor solutions to gaseous ammonia and other gases to provide ammonia for the selective catalytic reduction process using a catalyst according to any of the claims 1 to 16.
